# EUROPÄISCHE PATENTSCHRIFT

(11) **EP 0 974 814 B1**
(45) Veröffentlichungstag und Bekanntmachung des Hinweises auf die Patenterteilung: **23.09.2009**
(21) Anmeldenummer: 98113671.6
(22) Anmeldetag: 22.07.1998
(51) Int. Cl.: G01F 1/66

(54) **Ultraschallwandler-Anordnung**
Ultrasound transducer device
Dispositif transducteur à ultrasons

(43) Veröffentlichungstag der Anmeldung: 26.01.2000
(73) Patentinhaber: Endress + Hauser Flowtec AG, 4153 Reinach BL 1 (CH)
(72) Erfinder: Lopatin, Sergej Dr., 79539 Lörrach (DE); Schwarzenberger, Peter Dr., CH-4317 Möhlin (CH); Kamber, Walter, CH-4457 Dietgen (CH)
(74) Vertreter: Andres, Angelika Maria

(56) Entgegenhaltungen:
- EP-A- 0 260 335
- EP-A- 0 401 643
- EP-A- 0 679 874
- DE-A- 3 012 038
- DE-A- 3 013 482
- DE-B- 2 934 031
- DE-U- 9 015 615
- PATENT ABSTRACTS OF JAPAN vol. 098, no. 011, 30. September 1998 & JP 10 153614 A (HOKURIKU ELECTRIC IND CO LTD), 9. Juni 1998

## Beschreibung

Die Erfindung beschäftigt sich mit der Schaffung von Ultraschallwandler-Anordnungen.

Derartige Ultraschallwandler-Anordnungen werden z.B. von außen an einer, insb. bereits innerhalb eines Rohrleitungssystems fest installierten, Rohrleitung befestigt, ohne an dieser eine Veränderung vornehmen, z.B. eine Bohrung anbringen, zu müssen. Zwei solche Ultraschallwandler-Anordnungen dienen dabei abwechselnd als Ultraschallsender bzw. Ultraschallempfänger. Aus von ersterem gesendeten Signalen und von letzterem empfangenen Signalen läßt sich die Strömungsgeschwindigkeit und/oder der Volumendurchfluß elektronisch ermitteln.

Die Ultraschallwandler-Anordnung umfaßt üblicherweise einen Substratkörper, auf dem ein Wandlerelement aus einem keramischen piezoelektrischen Material befestigt ist. Wandlerelement und Substratkörper bestehen i.a. aus Materialien mit, insb. stark, unterschiedlichen thermischen Ausdehnungskoeffizienten, so daß die meist flächenhafte Verbindungsstelle von Wandlerelement und Substratkörper bei Temperaturwechseln, insb. starken, mechanischen Scher- und Zugspannungen unterworfen ist, die die an sich feste Verbindung mit der Zeit zerstören.

Eine Ultraschallwandler-Anordnung für den Einsatz in heißen Flüssigkeiten ist aus DE-U-9015615 bekannt. Sie enthält ein scheibenförmiges Wandlerelement aus einem keramischen piezoelektrischen Material und einen Substratkörper aus einem hochtemperatur-thermoplastischen Material mit einer Auflagefläche zur Auflage auf einem Gegenstand, in den eine Ultraschallenergie eingestrahlt oder aus dem eine Ultraschall-Energie empfangen werden soll. Zwischen dem Substratkörper und dem Wandlerelement befindet sich eine Metallscheibe (z.B. aus Kupfer), dessen Dicke kleiner als ein Viertel der Wellenlänge des Ultraschalls in der Metallscheibe ist.

Eine Aufgabe der Erfindung besteht darin, eine Ultraschallwandler-Anordnung anzugeben, die in einem weiten Temperaturbereich eingesetzt werden kann, ohne daß die Verbindungsstelle von Wandlerelement und Substratkörper bei Temperatur-Wechselbeanspruchung zerstört wird.

Zur Lösung dieser Aufgabe besteht die Erfindung in einer Ultraschallwandler-Anordnung
- mit einem scheibenförmigen Wandlerelement aus einem keramischen piezoelektrischen Material und
- mit einen Substratkörper aus einem hochtemperatur-thermoplastischen Material mit einer Auflagefläche zur Auflage auf einem Gegenstand, in den eine Ultraschall-Energie eingestrahlt oder aus dem eine Ultraschall-Energie empfangen werden soll,
   - auf welchem Substratkörper das Wandlerelement unter Zwischenlage einer Metallscheibe unter Ausbildung einer starren Verbindung aufgeklebt ist,
      - -- die einen thermischen Ausdehnungskoeffizienten hat, der zwischen dem des Substratkörpers und dem des Wandlerelements liegt, und
      - -- deren Dicke höchstens gleich einem Viertel der Wellenlänge des Ultraschalls in der Metallscheibe ist.

Nach einer ersten bevorzugten Ausgestaltung der Erfindung ist der Substratkörper des Ultraschallwandlers kreiszylindrisch und das Wandlerelement und die Metallscheibe sind in einer zur Auflagefläche schrägen Ebene aufgeklebt.

Nach einer zweiten bevorzugten Ausgestaltung der Erfindung - bildet die schräge Ebene die Bodenfläche einer Schrägbohrung, und
- die Metallscheibe ist durch drei um jeweils ca. 120° gegeneinander versetzte Finger selbst-zentrierend bezüglich der Schrägbohrung und durch drei um jeweils ca. 120° gegeneinander versetzte Nasen, das Wandlerelement zentrierend, ausgebildet.

Nach einer dritten bevorzugten Ausgestaltung der Erfindung besteht die Metallscheibe aus Rein-Aluminium.

Ein wesentlicher Vorteil der Erfindung besteht darin, daß die Ultraschallwandler-Anordnung in einem weiten Temperaturbereich eingesetzt werden kann, ohne daß die Verbindungsstellen zwischen Substratkörper und Metallscheibe und Metallscheibe und Wandlerelement zerstört werden.

Ferner kann die Ultraschallwandler-Anordnung breitbandiger als eine Ultraschallwandler-Anordnung ohne Metallscheibe betrieben werden. Auch ist die akustische Anpassung zwischen Wandlerelement und Substratkörper aufgrund der Metallscheibe verbessert.

Die Erfindung wird nun anhand der Figuren der Zeichnung näher erläutert, in der ein bevorzugtes Ausführungsbeispiel dargestellt ist.
- Fig. 1: zeigt in Seitenansicht eine Ultraschallwandler- Anordnung,
- Fig. 2: zeigt perspektivisch die Ultraschallwandler- Anordnung der Fig. 2, gesehen in Richtung von deren Pfeil A, und
- Fig. 3: zeigt perspektivisch und in Schnittansicht entlang der Linie B-B von Fig. 2 den Ultraschallwandler- Anordnung der Fig. 1 und 2.

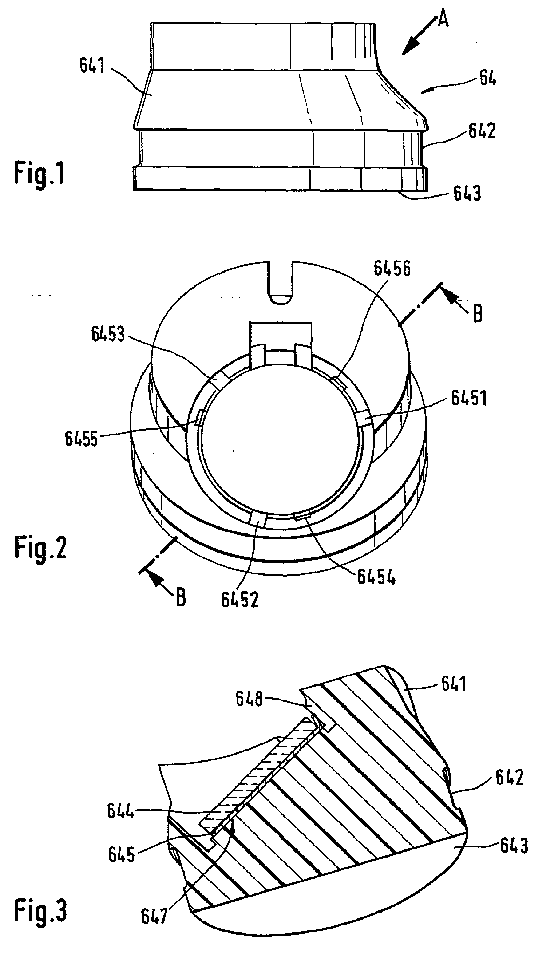

In der Seitenansicht der Fig. 1 ist von der Ultraschallwandler-Anordnung 64 ein Substratkörper 641 zu sehen. Dieser ist kreiszylindrisch und besteht aus einem hochtemperatur-thermoplastischen Material, wie z.B. einem unverfüllten Polyetherimid (PEI), wie es unter dem Handelsnamen Ultem 1000 erhältlich ist.

Der Substratkörper 641 ist mit einer Ringnut 642 versehen, die zur Aufnahme eines O-Rings dienen kann, wenn die Ultraschallwandler-Anordnung z.B. in einer Bohrung dicht fixiert werden soll. Ferner hat der Substratkörper 641 eine ebene Auflagefläche 643, die auf einen Gegenstand, in den eine Ultraschall-Energie eingestrahlt oder aus dem eine Ultraschall-Energie empfangen werden soll, aufzusetzen ist.

Dieser Gegenstand kann, wie eingangs bereits erwähnt wurde, z.B. eine Rohrleitung sein, in der ein Fluid (Pulver, Flüssigkeit, Gas, Dampf) fließt, dessen Volumendurchfluß und/oder Strömungsgeschwindigkeit gemessen werden soll/sollen. Dabei werden zwei Ultraschallwandler-Anordnungen beabstandet voneinander aufgesetzt oder aufgeschnallt und abwechselnd als Ultraschallsender bzw.

Aus z.B. der Laufzeit-Differenz der gesendeten Signale läßt/lassen sich die Strömungsgeschwindigkeit und/oder der Volumendurchfluß nach üblichen Verfahren elektronisch ermitteln.

In Fig. 2 ist die Ultraschallwandler-Anordnung 64 von Fig. 1 perspektivisch dargestellt, und zwar gesehen in Richtung von deren Pfeil A, und in Fig. 3 ist perspektivisch eine Schnittansicht entlang der Linie B-B von Fig. 2 zu sehen.

Auf dem Substratkörper 641 ist ein Wandlerelement 644 unter Zwischenlage einer Metallscheibe 645 aufgeklebt. Das Wandlerelement 644 ist scheibenförmig und besteht aus einem keramischen piezoelektrischen Material, wie z.B. aus einer PZT-5-Standard-Soft-Keramik. Die Metallscheibe 645 hat einen thermischen Ausdehnungskoeffizienten, der zwischen dem des Substratkörpers 643 und dem des Wandlerelements 644 liegt.

Die Dicke der Metallscheibe 645 ist höchstens gleich einem Viertel der Wellenlänge, die der zur Anwendung gelangende Ultraschalll in der Metallscheibe 645 hat. Diese besteht bevorzugt aus Rein-Aluminium. Sie kann aber auch z.B. aus Titan, Edelstahl, Messing oder Blei bestehen.

Als Klebstoffe eignen sich besonders gut Kleber auf Epoxidharzbasis, die eine oberhalb der zulässigen Betriebstemperatur der Ultraschallwandler-Anordnung liegende Glasübergangstemperatur aufweisen. Solche Kleber sind z.B. unter den Produktbezeichnungen AV8 und AV118 von der Fa. Ciba-Geigy, Basel/Schweiz erhältlich.

Das Wandlerelement 644 und die Metallscheibe 645 sind in bevorzugter Ausgestaltung der Erfindung in einer zur Auflagefläche 644 schrägen Ebene 647 aufgeklebt. Diese bildet die Bodenfläche einer Schrägbohrung 648.

Ebenfalls in bevorzugter Ausgestaltung der Erfindung ist die Metallscheibe 645 durch drei um jeweils ca. 120° gegeneinander versetzte Finger 6451, 6452, 6453 selbst-zentrierend bezüglich der Schrägbohrung 648 ausgebildet. Ferner ist die Metallscheibe 645 durch drei gegen die Finger 6451 bzw. 6452 bzw. 6453 um jeweils ca. 120° gegeneinander versetzte Nasen 6454 bzw. 6455 bzw. 6456 so ausgebildet, daß durch sie das Wandlerelement 644 ebenfalls zentriert wird. Die drei Nasen sind aus der Ebene der Metallscheibe 645 herausgebogen.

## Patentansprüche

1. Ultraschallwandler-Anordnung (64)
- mit einem scheibenförmigen Wandlerelement (644) aus einem keramischen piezoelektrischen Material und
- mit einem Substratkörper (641) aus einem hochtemperatur-thermoplastischen Material mit einer Auflagefläche (643) zur Auflage auf einem Gegenstand, in den eine Ultraschall-Energie eingestrahlt oder aus dem eine Ultraschall-Energie empfangen werden soll,
- - auf welchem Substratkörper das Wandlerelement unter Zwischenlage einer Metallscheibe (645) unter Ausbildung einer starren Verbindung aufgeklebt ist,
- -- die einen thermischen Ausdehnungskoeffizienten hat, der zwischen dem des Substratkörpers und dem des Wandlerelements liegt, und
- -- deren Dicke höchstens gleich einem Viertel der Wellenlänge des Ultraschalls in der Metallscheibe (645) ist.

2. Ultraschallwandler-Anordnung nach Anspruch 1, bei der der Substratkörper (641) kreiszylindrisch ist und das Wandlerelement (647) und die Metallscheibe (645) in einer zur Auflagefläche (643) schrägen Ebene (647) aufgeklebt sind.

3. Ultraschallwandler-Anordnung nach Anspruch 2, bei der
- die schräge Ebene (647) die Bodenfläche einer Schrägbohrung (648) bildet und
- die Metallscheibe (645) durch drei um jeweils ca. 120° gegeneinander versetzte Finger (6451, 6452, 6453) selbst-zentrierend bezüglich der Schrägbohrung (648) und durch drei um jeweils ca. 120° gegeneinander versetzte Nasen (6454, 6455, 6456), das Wandlerelement (644) zentrierend, ausgebildet ist.

4. Ultraschallwandler-Anordnung nach Anspruch 1, bei der die Metallscheibe (645) aus Rein-Aluminium besteht.

## Claims

1. An ultrasonic transducer arrangement (64)
- with a disc-shaped transducer element (644) composed of a ceramic piezoelectric material, and
- with a substrate body (641) composed of a high-temperature thermoplastic material with a mounting surface (643) for mounting on an object into which ultrasonic energy is to be radiated or from which ultrasonic energy is to be received,
- - on which substrate body the transducer element is adhesively bonded, forming a rigid connection, with the interposition of a metal disc (645)
- -- which has a thermal expansion coefficient that lies between that of the substrate body and that of the transducer element, and
- -- the thickness of which is at most equal to one quarter of the wavelength of the ultrasound in the metal disc (645).

2. An ultrasonic transducer arrangement according to Claim 1, in which the substrate body (641) is circular-cylinder-shaped and the transducer element (647) and the metal disc (645) are adhesively bonded thereon in a plane (647) which is inclined in relation to the mounting surface (643).

3. An ultrasonic transducer arrangement according to Claim 2, in which
- the inclined plane (647) forms the base surface of an oblique bore (648), and
- the metal disc (645) is formed by three fingers (6451, 6452, 6453), each offset by approximately 120° in relation to one another, so as to be self-centring with respect to the oblique bore (648), and by three projections (6454, 6455, 6456), each offset by approximately 120° in relation to one another, centring the transducer element (644).

4. An ultrasonic transducer arrangement according to Claim 1, in which the metal disc (645) consists of pure aluminium.

## Revendications

1. Dispositif à convertisseur ultrasonique (64)
- comprenant un élément convertisseur (644) en forme de disque, en céramique piézoélectrique et
- comprenant un corps-substrat (641) en une matière thermoplastique haute température avec une surface (643) servant d'appui sur un élément, dans lequel une énergie ultrasonore doit être émise, ou à partir duquel une énergie ultrasonore doit être reçue,
- - corps-substrat, sur lequel est collé l'élément convertisseur après avoir intercalé un disque métallique (645), formant ainsi une liaison rigide,
- -- disque, qui présente un coefficient de dilatation thermique se trouvant entre celui du corps-substrat et celui de l'élément convertisseur, et
- -- dont l'épaisseur est au maximum égale à un quart de la longueur d'onde de l'ultrason dans le disque métallique (645).

2. Dispositif à convertisseur ultrasonique selon la revendication 1, pour lequel le corps substrat (641) présente une forme cylindrique circulaire, et l'élément convertisseur (647) et le disque métallique (645) sont collés dans un plan oblique (647) par rapport à la surface d'appui (643).

3. Dispositif à convertisseur ultrasonique selon la revendication 2, pour lequel
- le plan oblique (647) constitue la surface de fond d'un alésage oblique (648) et
- le disque métallique (645) est conçu de façon autocentrante par rapport à l'alésage oblique (648) grâce à trois doigts (6451, 6452, 6453) décalés d'env. 120° les uns par rapport aux autres, et l'élément convertisseur (644) est également centré grâce à trois ergots (6454, 6455, 6456) décalés d'env. 120° les uns par rapport aux autres.

4. Dispositif à convertisseur ultrasonique selon la revendication 1, pour lequel le disque métallique (645) est en aluminium pur.
